(19) Europäisches Patentamt
European Patent Office
Office européen des brevets

(11) Veröffentlichungsnummer : **0 070 536**
**B1**

# (12) EUROPÄISCHE PATENTSCHRIFT

(45) Veröffentlichungstag der Patentschrift : **05.06.85**

(21) Anmeldenummer : **82106408.6**

(22) Anmeldetag : **16.07.82**

(51) Int. Cl.⁴ : **C 08 G 18/10**, C 08 G 18/32, C 08 G 18/28, C 08 G 59/50, C 09 D 3/58

## (54) Elastifiziertes Additionsprodukt auf Basis von Polyalkylenätherpolyolen und Polyisocyanaten und deren Verwendung.

(30) Priorität : **21.07.81 DE 3128733**

(43) Veröffentlichungstag der Anmeldung : **26.01.83 Patentblatt 83/04**

(45) Bekanntmachung des Hinweises auf die Patenterteilung : **05.06.85 Patentblatt 85/23**

(84) Benannte Vertragsstaaten : **AT CH DE GB LI NL**

(56) Entgegenhaltungen :
**FR-A- 2 267 335**
**US-A- 3 251 788**

(73) Patentinhaber : **HOECHST AKTIENGESELLSCHAFT**
**Postfach 80 03 20**
**D-6230 Frankfurt am Main 80 (DE)**

(72) Erfinder : **Becker, Wilhelm, Dr.**
**Öjendorfer Höhe 37c**
**D-2000 Hamburg (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 070 536 B1

**Beschreibung**

Epoxidharze finden seit langem einen weiten Einsatz zur Herstellung von Korrosionsschutzanstrichen, abriebfesten Beschichtungen, Vergußmassen und Klebstoffen, die hervorragende mechanische Festigkeit besitzen und gute Chemikalienbeständigkeit aufweisen. Infolge ihrer hohen Vernetzungsdichte sind amin gehärtete Epoxidharze, vor allem auf Basis von Bisphenol A und Epichlorhydrin, spröde ; sie weisen Glasübergangstemperaturen oberhalb 20 °C auf.

In der Praxis sind die große Härte und hohe Festigkeit amin-gehärteter Epoxidharze nicht immer nötig ; gleichzeitig ist häufig eine Elastifizierung und Verminderung der Sprödigkeit erwünscht. Um dieses zu erreichen, sind bisher verschiedene Methoden angewendet worden, die aber immer noch eine Versprödung der Produkte bei niedrigen Temperaturen hervorriefen und außerdem wegen mangelnder Dauerelastizität und teilweiser unerwünschter Nachhärtung nicht immer befriedigten.

Prinzipiell kann man den Elastifizierungsgrad durch Verringerung der Vernetzungsdichte des Harzes (intern) oder durch Weichmacherzusatz zum Harz (extern) erhöhen.

Weichmacher sind nicht reaktiv und werden deshalb nicht in das Netzwerk des gehärteten Harzes eingebaut. Sie bewirken nur durch Raumausfüllung eine Aufweitung des Netzwerkes. Zu den Weichmachern zählen beispielsweise Teer, Phthalsäureester, hochsiedende Alkohole, Polyglykole, Ketonharze, Vinylpolymere und ähnliche mit Epoxidharzen und Aminhärtern nicht reaktive Produkte. Diese Art der Modifizierung ist nur für bestimmte Anwendungen geeignet. Zur Elastifizierung trägt sie kaum bei, da der Glaserweichungsbereich nur unwesentlich beeinflußt wird, die Struktur des gehärteten Harzes aber stark gestört wird.

Eine interne Elastifizierung von Epoxidharzen läßt sich z. B. durch Reduzierung der Funktionalität des Härters erreichen. Diese hat jedoch keine ausreichende Vernetzung zur Folge und führt dadurch zu ungenügenden mechanischen Eigenschaften.

Eine interne Plastifizierung der Epoxidharze läßt sich auch durch die Umsetzung überschüssiger Mengen eines Epoxidharzes mit Rizinusöl erreichen, wobei die Hydroxylgruppen des Rizinusöls mit einem Teil der Epoxidgruppen umgesetzt werden. Auch hierfür gelten die vorstehend erwähnten Nachteile.

Schon lange und in erheblichem Umfang gebräuchlich sind langkettige, niedrig funktionelle Aminoamide auf Basis dimerer und trimerer Fettsäuren. Hiermit läßt sich ein befriedigendes Eigenschaftsbild erreichen ; jedoch sind diese weichen Härter wegen der Mängel der internen Plastifizierung nicht so universell einsetzbar wie es wünschenswert wäre.

Es ist auch bekannt, Systeme aus Epoxidharzen und Aminoamiden durch Zumischung von Polyurethanen zu modifizieren. Eine weitere Ausbildung in Richtung auf elastifizierte Kunststoffe hat dieses System durch das in der DE-OS-2 152 606 beschriebene Verfahren gefunden. Derartige Systeme haben jedoch nicht immer die erforderliche Lagerstabilität.

Außerdem ist ein Verfahren zur Elastifizierung durch Umsetzen von Epoxidverbindungen mit Härtungsmitteln bekannt, die Additionsprodukte aus Polyalkylenäther-polyolen und Polyisocyanaten darstellen, wobei das Verhältnis von NCO-Gruppen zu OH-Gruppen (1,5 bis 2,5) : 1 beträgt, die weiter mit Hydroxylgruppen enthaltenden Ketiminen und/oder Enaminen umgesetzt werden, wobei das Verhältnis NCO-Gruppen zu OH-Gruppen 1 : 1 beträgt. Auch diese Produkte weisen eine zu geringe Vernetzungsdichte auf.

Es war daher erwünscht, Verbindungen herzustellen, die diese Nachteile vermeiden.

Gegenstand der Erfindung ist ein elastifiziertes Additionsprodukt aus a) Polyalkylenäther-polyolen mit einem Molgewicht von 500 bis 10 000 und 2 bis 6 C-Atomen im Alkylenrest und b) Polyisocyanaten, wobei das Verhältnis der NCO-Gruppen der Komponente b) zu OH-Gruppen der Komponente a) 1,5 : 1 bis 2,5 : 1 beträgt, das dadurch gekennzeichnet, ist, daß das Additionsprodukt von a) mit b) weiter mit Hydroxyverbindungen der Gruppe c) Imidazolidine der Formel I (siehe Anspruch 1), worin R Wasserstoff oder Alkyl mit 1 bis 4 C-Atomen, $R^1$ c1) Wasserstoff, c2) Hydroxyalkyl und Alkyl mit jeweils 1 bis 12 C-Atomen, c3) $—CH_2—R^5$, c4) $—CH_2—CH_2—COOR^5$, c5) $—CH_2—CH_2—C=O$

$$\begin{array}{c} | \\ R^5—N—R^5 \end{array}$$

oder c6) $—CH_2—CH_2—CN$ ist, worin $R^5$ jeweils Hydroxyalkyl oder Alkyl mit bis zu 8 C-Atomen darstellt, $R^2$ c7) Alkyl oder Alkylen mit jeweils 1 bis 12 C-Atomen oder einen der Reste c3) bis c6) bedeutet, $R^3$ und $R^4$ jeweils Wasserstoff oder Alkyl mit 1 bis 5 C-Atomen oder $R^3$ und $R^4$ zusammen Alkylen mit 4 bis 6 C-Atomen bedeuten und/oder d) Hexahydropyrimidinderivate der allgemeinen Formel II (siehe Anspruch 1) worin $R^1$ bis $R^5$ die unter c) genannte Bedeutung haben, wobei in den Formeln (I) und (II) jeweils mindestens einer der Substituenten $R^1$ bis $R^5$ eine Hydroxylgruppe trägt, im Verhältnis NCO-Gruppen zu den OH-Gruppen der Komponenten c) und/oder d) etwa 1 : 1 umgesezt ist und als dieses Umsetzungsprodukt und/oder als Hydrolyseprodukt davon vorliegt.

Im Rahmen der Erfindung liegt auch die Verwendung von A) mindestens einem elastifizierten Additionsprodukt gemäß der Erfindung als Härter für B) Epoxidverbindungen mit mehr als einer Epoxidgruppe pro Molekül oder Kombinationen davon mit Monoepoxidverbindungen allein oder zusammen mit C) weiteren üblichen Zusätzen. Diese Mischungen härten zu elastischen Produkten, z. B. Formkörpern, mit einwandfreien günstigen physikalischen und chemischen Eigenschaften.

Die Mischungen können als Härter A) auch Gemische von Reaktionsprodukten der Verbindungen a) bis c) bzw. d) enthalten.

Die erfindungsgemäßen Produkte stellen Härter dar und sind Polyurethane mit endständigen Aminogruppen.

Zur Herstellung eignen sich im allgemeinen als Ausgangsaddukte lineare oder verzweigte Polyalkylenäther-polyole, vorzugsweise Polypropylenoxide. Bevorzugt werden im allgemeinen Produkte mit einem mittleren Molekulargewicht zwischen 2 000 und 5 000 verwendet. Als Polyisocyanate seien z. B. genannt : 2,4- und 2,6-Toluylendiisocyanat, 4,4-Diphenylmethandiisocyanat, m-Xylylendiisocyanat, 2,2,4-(2,4,4)-Trimethylhexamethylendiisocyanat, 1,6-Hexamethylendiisocyanat, 1-Isocyanato-3-isocyanatomethyl-3,5,5-trimethyl-cyclohexan (Isophorondiisocyanat) und das Additionsprodukt aus 1 Mol Trimethylolpropan und 3 Mol Isophorondiisocyanat. Besonders geeignet sind aliphatische und cycloaliphatische Diisocyanate wie Hexamethylendiisocyanat und Isophorondiisocyanat, jedoch auch Toluylendiisocyanat, jeweils einzeln oder im Gemisch.

Zur Herstellung der Ausgangsaddukte wird das Reaktionsgemisch in an sich bekannter Weise nach Zugabe eines geeigneten Katalysators wie 0,1 % Dibutylzinndilaurat eine Zeit lang, z. B. einige Stunden erwärmt, z. B. auf 50 bis 100 °C, bis der analytisch ermittelte Isocyanatgehalt mit dem berechneten Wert weitgehend übereinstimmt. Man kann aber auch einen Reaktionspartner, z. B. das Polyisocyanat vorlegen und das Polyalkylenätherpolyol bei den Reaktionsbedingungen zugeben.

Die Herstellung der Ausgangskomponenten c) bzw. d), also der Hydroxylgruppen enthaltenden Imidazolidin- bzw. Hexahydropyrimidinderivate erfolgt z. B. in der Weise, daß man Aminoalkylenalkanolamine, die sowohl eine primäre oder sekundäre Hydroxylgruppe als auch eine primäre und eine sekundäre oder zwei sekundäre Aminogruppen tragen können, mit Aldehyden unter Wasserabspaltung cyclisiert und an etwa noch vorhandenen basischen Wasserstoff Verbindungen mit aktivierten C = C-Doppelbindungen, z. B. eine Acrylverbindung, wie Acrylnitril, Acrylamid, Acrylsäurealkyl- und/oder -hydroxyalkylester addiert, oder daß man den etwa vorhandenen basischen Wasserstoff mit einem Aldehyd unter Wasserabspaltung umsetzt. Man kann aber auch von mit Alkyresten substituierten Alkylendiaminen ausgehen, wenn an das verbleibende sekundäre basische Wasserstoffatom ein Acrylsäurehydroxyalkylester addiert wird. Weiterhin kann man Alkylendiamin, z. B. Äthylendiamin oder Propylendiamin, mit α) Acrylsäurehydroxyalkylestern bzw. β) Gemischen von gleichen Molmengen aus Acrylsäurehydroxyalkylestern und Acrylsäurealkylestern, Acrylnitril und/oder Acrylamid im Molverhältnis 1 : 2 umsetzen und anschließend mit Aldehyden und/oder Ketonen cyclisieren.

Als Aminoalkylalkanolamine sind. z. B. Aminoäthyläthanolamin, Aminoäthylpropanolamin, Aminoäthylisopropanolamin, Aminoäthylbutanolamin sowie die entsprechenden Aminopropylderivate geeignet.

Zur Cyclisierung der Aminoalkylalkanolamine bzw. zur Umwandlung der Cyclisierungsprodukte, z. B. solchen aus 1 Mol Alkylendiamin und 2 Molen der Verbindungen mit aktivierten C = C-Doppelbindungen, sind vor allem aliphatische Aldehyde wie Formaldehyd, Acetaldehyd, Isobutylraldehyd oder aliphatische oder cyclische Ketone, wie Methylisobutylketon, Diisopropylketon, Diisobutylketon, Cyclohexanon, Trimethylcyclohexanon oder dgl. geeignet.

Die Cyclisierung erfolgt z. B. so, daß die Ausgangsverbindungen, d. h., Aminoalkylalkanolamine und Carbonylverbindungen in einem äquivalenten Verhältnis oder mit einem Überschuß der Carbonylverbindung gemischt werden und nach Zusatz eines Schleppmittels und eventuell eines sauren Katalysators so lange am Wasserabscheider erhitzt werden, bis die Wasserabscheidung beendet ist. Nach Abdestillation des Schleppmittels und der überschüssigen Carbonylkomponente wird der Rückstand gegebenenfalls destilliert. Die Ausgangsprodukte werden mit den hydroxylgruppenhaltigen Imidazolidinen bzw. Hexahydropyrimidinen in der Kälte bzw. bei erhöhter Temperatur bis zu 150 °C, vorzugsweise 50 bis 150 °C im NCO : OH-Verhältnis von 1 : 1 gemischt und so lange gerührt, bis z. B. im Infrarotspektrum keine NCO-Bande mehr nachweisbar ist.

Die Mischungen können die erfindungsgemäßen Imidazolidin- oder Hexahydropyrimidin-Endgruppen enthaltenden elastifizierten Addukte als Härter direkt mit den Polyepoxiden bzw. mit einem weiteren Härter und den Polyepoxiden gemischt enthalten, wobei die Aminogruppe im allgemeinen durch vorhandene Restfeuchtigkeit oder Luftfeuchtigkeit freigesetzt wird. Die Härtung erfolgt daher zweckmäßig in Gegenwart von Wasser.

Die Aminogruppen können aber auch direkt im frisch erstellten Addukt unter Einleiten von Wasserdampf oder durch Zusatz von Wasser und Erwärmung freigesetzt werden.

Die erfindungsgemäßen Härter A) sind lagerstabil. Sie können mit an sich bekannten handelsüblichen niedrigmolekularen Aminhärtern, die mindestens 2 reaktive Aminwasserstoffverbindungen aufweisen, unter Bildung von ebenfalls lagerstabilen Mischungen gemischt werden. Dabei wird im allgemeinen die Viskosität der erfindungsgemäßen Härter wesentlich erniedrigt und die Reaktivität der Mischung vor allem bei Umsetzung mit Epoxidverbindungen gesteigert. Es ist aber auch möglich, daß die Mischungen der Komponenten A) bis C) noch Verdünner wie Benzylalkohol, Pine oil, die üblichen Weichmacher wie Phthalate oder dgl., jeweils allein oder zusammen mit den Aminhärtern enthalten.

Beispiele üblicher Aminhärter sind aliphatische Amine, z. B. Polyäthylenpolyamine und Polypropylenpolyamine, z. B. Diäthylentriamin, Dipropylentriamin und Triäthylentetramin ; cycloaliphatische Diamine, wie 1-Amino-3-aminomethyl-3,5,5-trimethyl-cyclohexan (Isophorondiamin), 3,3′-Dimethyl-4,4′-diamino-dicyclohexyl-methan ; heterocyclische Amine, wie Piperazin ; langkettige Polyätheramine,

wie 1,12-Diamino-4,8-dioxadodecan ; aromatische Amine, wie Phenylendiamin, Diaminodiphenylmethan ; Polyamidoamine aus natürlichen oder synthetischen Fettsäuren und Polyaminen ; Aminaddukte ; Phenolaldehydaminkondensate. Ferner eignen sich auch Amin abspaltende Verbindungen, wie Ketimine oder Enamine. Diese Aminabspalter sind vor allem für die Herstellung von Einkomponenten-Mischungen mit Epoxidharzen vorteilhaft.

Die große Vartiationsmöglichkeit der zusätzlichen bekannten Aminhärter mit unterschiedlichen Funktionalitäten und Viskositäten bei der Kombination mit den erfindungsgemäßen Härtern bewirkt auch einen vielfältigen Variationsbereich bei der Verarbeitung und bei der Einstellung der gewünschten Eigenschaften der gehärteten Mischung.

Die Härter können in bekannter Weise mit Viskositätsreglern, Beschleunigern wie tertiären Aminen, Triphenylphosphit, Alkylphenolen oder mit Schnellhärtern, wie Mannichbasen, vermischt werden.

Die Mischungen der Komponenten A) bis C) sind in einem weiten Temperaturbereich härtbar, d. h. sowohl bei niedrigen, z. B. 10-50, vorzugsweise 15-25 °C, wie auch bei erhöhten Temperaturen, z. B. 50-150, vorzugsweise 80-110 °C. Die Epoxidverbindungen enthalten im allgemeinen im Durchschnitt mehr als eine Epoxidgruppe im Molekül, haben ein Epoxidäquivalent von 150 bis 1 000 vzw. 170 bis 250 und ein Molekulargewicht von 300 bis 2 000 vorzugsweise 330 bis 600. Sie können z. B. Glycidyläther von mehrwertigen Alkoholen, wie Glycerin, hydriertem Bisphenol A oder von mehrwertigen Phenolen, wie Resorcin, Bisphenol A, Diphenylolmethan oder Phenol-Aldehyd-Kondensaten sein. Es können auch die Glycidylester mehrwertiger Carbonsäuren, wie Hexahydrophthalsäure oder dimerisierte Fettsäuren verwendet werden. Besonders bevorzugt ist der Einsatz von flüssigen Epoxidharzen auf Basis von Epichlorhydrin und Bisphenol A mit einem Molekulargewicht von 340 bis 450.

Gegebenenfalls kann mit zusätzlichen monofunktionellen Epoxidverbindungen die Viskosität der erfindungsgemäßen Mischungen gesenkt und dadurch die Verarbeitbarkeit verbessert werden. Beispiele hierfür sind aliphatische und aromatische Glycidyläther, wie Butylglycidäther, Phenylglycidäther oder Glycidylester, wie Glycidylacrylat oder Epoxide, wie Styroloxid.

Die Kombination der erfindungsgemäßen elastifizierten Addukte in Form langkettiger, schwach vernetzter Polyätherurethan-amine, Polyätherurethan-imidazolidine oder Polyätherurethan-hexahydropyrimidine mit hochvernetzten Aminformulierungen ermöglicht die Einstellung der Eigenschaften der reaktiven Mischungen in bezug auf Viskosität, Reaktivität sowie der Eigenschaften des gehärteten Harzes in bezug auf Elastizität, Vernetzungsdichte, mechanische Festigkeit und Chemikalienbeständigkeit.

Zur Herstellung einer reaktiven Mischung der Komponenten A) bis C) für die Beschichtung, Verklebung oder zum Verguß kommen die üblichen Füllstofe auf mineralischer Basis, Pigmente, Weichmacher, Beschleuniger, Lösungsmittel und sonstige Zusatzmittel in Betracht.

Geeignete anorganische Füllstoffe sind z. B. Mineralpulver wie Gesteinsmehl, Schiefermehl, Mamorpulver, Quarzmehl, Quarzsand, Kreide, Glasmehl, Asbest, Graphit, Metallpulver, Metallspäne und Metalloxide. Als organische Füllstoffe werden z. B. genannt : Cellulosefasern, wie Holzmehl, Sägemehl.

Geeignete organische Pigmente sind z. B.: Phthalocyanin-, Chinacrion- und Anthrachinonverbindungen oder dgl. Als anorganische Pigmente eignen sich z. B. die bekannten Metalloxide, -sulfide usw.

Als Weichmacher eignen sich die bekannten Phthalsäure- und Sebacinsäureester, als Beschleuniger z. B. tertiäre Amine, Phenole, Salicylsäure, als Lösungsmittel z. B. Benzylalkohol, aromatische Kohlenwasserstoffe, wie Toluol oder Xylol oder dgl.

Die Mischungen aus A) bis C) können zur Herstellung von Formkörpern mit eingestellten. Elastizitätseigenschaften, worunter auch Vergußmassen und Flächengebilde, wie Überzüge und Klebebindungen verstanden werden, unter Härtung besonders dort vorteilhaft angewendet werden, wo gute Haftung auf dem Untergrund, gute Chemikalienbeständigkeit und Elastizität zur Überbrückung von Rissen im Untergrund und zum Abbau innerer Spannungen notwendig sind.

Ein wichtiges Einsatzgebiet ist die Aus- und Verkleidung von Gegenständen, Herstellung von Überzügen wie die Beschichtung von Beton, z. B. von Heizöltanks. Wegen ihrer hervorragenden Haftung auf Eisen und Beton sowie der einstellbaren Elastizität eignen sich die erfindungsgemäßen Mischungen als Vergußmassen für Fugen und Klebstoffe mit hoher Klebkraft. Die überraschenderweise schwund- und spannungsarme Aushärtung gestattet die Herstellung von Formkörpern, die auch große Dimensionen haben können.

Im folgenden bedeutet % stets Gewichts-%.

## Beispiele

I. Die Herstellung der Ausgangsprodukte (Formeln III bis XII des Formelblattes) wird in Beispielen 1 bis 10 beschrieben, wobei die erhaltene Produkte in allen Fällen weiter verarbeitet oder im Hochvakuum von Verunreinigungen befreit werden können.

1) 1-β-Hydroxyäthyl-3-β-cyanoäthyl-imidazolidin

In einem Dreihalskolben mit Rühren, Wasserabscheider und Rückflußkühler werden in 300 ml Toluol 104,2 g (1 Mol) Aminoäthyläthanolamin und 34 g Paraformaldehyd (91 %ig) gelöst und unter Rückfluß und

Kreislaufentwässerung (d. h. Entwässerung und darauf folgende Rückführung des Destillates) zum Sieden erhitzt. Nach 3 Stunden sind die berechneten Mengen Wasser ausgekreist. Bei 60-70 °C wird dann unter Kühlung in 60 Minuten 53 g Acrylnitril zugetropft. Die Addition wird bei 60-70 °C in 2 Stunden vervollständigt. Danach wird das Toluol unter vermindertem Druck entfernt. Man erhält das rohe Imidazolidin der Formel III als niedrigviskose Flüssigkeit. Das Hydroxyläquivalent beträgt ca. 169.

2) 1-β-Hydroxyäthyl-3-(2-methyl-)propen-(1,2)-yl-imidazolidin

Es wird zunächst wie im Beispiel 1 gearbeitet. Nach der Entfernung der berechneten Menge Wasser werden unter weiterer Kreislaufentwässerung in 60 Minuten 72 g iso-Butyraldehyd zugetropft. Nach Abscheidung der berechneten Menge Wasser wird das Toluol unter vermindertem Druck entfernt. Man erhält das rohe Imidazolidin der Formel IV. Das Hydroxyläquivalent beträgt ca. 170.

3) 1-β-Hydroxyäthyl-3-β-cyanoäthyl-hexahydropyrimidin

Man arbeitet entsprechend Beispiel 1, geht jedoch von 118,2 g (1 Mol) Aminopropyläthanolamin aus. Man erhält die rohe Verbindung der Formel V. Das Hydroxyläquivalent beträgt ca. 183.

4) 1-β-Hydroxyäthyl-3-(2-methyl)-propen-(1,2)-yl-hexahydropyrimidin

Man arbeitet entsprechend Beispiel 2, geht jedoch von 118,2 g (1 Mol) Aminopropyläthanolamin aus. Man erhält die rohe Verbindung der Formel VI. Das Hydroxyläquivalent beträgt ca. 184.

5) N,N'-Bis-(hydroxyäthyl-β-carbäthoxy) imidazolidin-1,3

33,5 ml (0,5 Mol) Äthylendiamin und 200 ml Toluol werden in einen Dreihalskolben mit Rührer, Tropftrichter, Aufsatz für Wasserabscheidung und Rückflußkühler mit Trockenrohr gegeben. Die Lösung wird auf ca. 0 °C abgekühlt ; danach werden 116 g (1 Mol) Hydroxyäthylacrylat langsam bei 0 bis 5 °C zugetropft. Die Kühlung wird nun abgesetzt ; die Temperatur des Kolbeninhalts steigt in etwa einer Stunde auf Raumtemperatur an. Bei Raumtemperatur wird noch 3 Stunden gerührt ; danach werden 16,5 g (0,5 Mol) Paraformaldehyd (91 %ig) zugesetzt und die Reaktionsmischung erhitzt und im Kreislauf entwässert. In 1 1/2-2 Stunden wird die berechnete Wassermenge durch azeotrope Destillation abgeschieden. Unter vermindertem Druck wird das Toluol entfernt. Man erhält die rohe Verbindung der Formel VII. Das Hydroxyläquivalent beträgt etwa 152.

6) N,N'-Bis-(hydroxyisopropyl-β-carbäthoxy-) imidazolidin-1,3

Es wird entsprechend Beispiel 5 gearbeitet, jedoch werden 130 g (1 Mol) Hydroxyisopropylacrylat addiert. Man erhält die rohe Verbindung der Formel VIII. Das Hydroxyläquivalent beträgt etwa 166.

7) N-Hydroxyäthyl-β-carbäthoxy-(N'-äthyl-β-carbäthoxy)-imidazolidin-1,3

Es wird entsprechend Beispiel 5 gearbeitet, jedoch wird ein äquimolares Gemisch aus 58 g (0,5 Mol) Hydroxyäthylacrylat und 50 g (0,5 Mol) Äthylacrylat addiert. Man erhält die rohe Verbindung der Formel IX. Das Hydroxyläquivalent beträgt etwa 288.

8) N,N'-bis-(hydroxyäthyl-β-carbäthoxy-)hexahydropyrimidin

Es wird entsprechend Beispiel 5 gearbeitet. Anstelle des Äthylendiamins werden jedoch 37 g (0,5 Mol) Propylendiamin eingesetzt. Man erhält die rohe Verbindung der Formel X. Das Hydroxyläquivalent beträgt etwa 159.

9) N,N'-Bis-(hydroxyisopropyl-β-carbäthoxy-)hexahydropyrimidin

Es wird entsprechend Beispiel 6 gearbeitet. Anstelle des Äthylendiamins werden jedoch 37 g (0,5 Mol) Propylendiamin eingesetzt. Man erhält die rohe Verbindung der Formel XI. Das Hydroxyläquivalent beträgt etwa 173.

10) N-Hydroxyäthyl-β-carbäthoxy-(N'-äthyl-β-carbäthoxy-)hexahydropyrimidin

Es wird entsprechend Beispiel 7 gearbeitet. Anstelle des Äthylendiamins werden jedoch 37 g (0,5 Mol) Propylendiamin eingesetzt. Man erhält die rohe Verbindung der Formel XII. Das Hydroxyläquivalent beträgt etwa 302.

II. Herstellung der Ausgangsaddukte (Präpolymere)

11) 174 g Toluylendiisocyanat (Isomerengemisch) und 0,2 g Dibutylzinndilaurat werden unter

Schutzgas auf 60 °C erwärmt und in 2 Stunden mit 1 000 g eines Polyoxypropylenglykols mit einem durchschnittlichen Molgewicht von 2 000 vermischt. Das Gemisch wird solange bei 60-70 °C gehalten, bis der NCO-Gehalt (etwa 3,27 %) konstant ist. Das Präpolymere wird unter Feuchtigkeitsausschluß aufbewahrt.

12) Beispiel 11 wird mit 131 g Toluylendiisocyanat (Isomerengemisch) wiederholt. Der NCO-Gehalt liegt bei 2,6 %.

13) Beispiel 11 wird mit 222,3 g 3-Isocyanato-methyl-3,5,5-trimethylcyclohexylisocyanat (IPDI = Isophorondiisocyanat) wiederholt. Der NCO-Gehalt liegt bei 3,4 %.

14) Beispiel 11 wird mit 210,3 g 2,2,4 (2,4,4)-Trimethylhexamethylendiisocyanat (TDMI) wiederholt. Der NCO-Gehalt liegt bei 3,45 %.

15) Beispiel 11 wird mit 168,5 g Hexamethylendiisocyanat wiederholt. Der NCO-Gehalt liegt bei 3,55 %.

16) 174 g Toluylendiisocyanat (Isomerengemisch) und 0,2 g Dibutylzinndilaurat werden unter Schutzgas auf 60 °C erwärmt und in 2 Stunden mit 1 400 g eines Polyoxypropylentriols mit einem durchschnittlichen Molgewicht von 4 200 vermischt. Das Gemisch wird solange bei 60-70 °C gehalten, bis der NCO-Gehalt (etwa 2,6 %) konstant ist. Das Präpolymere wird unter Feuchtigkeitsausschluß aufbewahrt.

Beispiele 17 bis 20

Man arbeitet entsprechend Beispiel 16 mit folgenden Mengen Diisocyanat :

| | | |
|---|---|---|
| 17) | 131 g Toluylendiisocyanat | (2,7 % NCO) |
| 18) | 222,3 g Isophorondiisocyanat | (2,35 % NCO) |
| 19) | 210,3 g Trimethylhexamethylendiisocyanat | (2,38 % NCO) |
| 20) | 168,5 g Hexamethylendiisocyanat | (2,43 % NCO) |

III. Herstellung der erfindungsgemäßen elastifizierten Addukte aus den Imidazolidinen bzw. Hexahydropyrimidinen der Beispiele 1-10 und den Isocyanat-Polyol-Präpolymeren der Beispiele 11-20

Die Hydroxylgruppen enthaltenden Komponenten (Beispiele 1-10) werden mit den Isocyanatgruppen enthaltenden Komponenten (Beispiele 11-20) so gemischt, daß 1 Äquivalent Isocyanat reagieren kann. Je nach der Viskosität der Komponenten kann die Umsetzung bei Raumtemperatur oder bei erhöhter Temperatur bis 150 °C, bevorzugt im Bereich von 60-100 °C erfolgen. Es ist auch möglich, die Umsetzung in einen inerten Lösungsmitel wie Xylol oder Toluol durchzuführen, das gegebenenfalls nach der Umsetzung wieder entfernt wird. Der vollständige Verlauf der Umsetzung kann durch Infrarotspektroskopie oder titrimetrisch verfolgt werden.

In einigen Beispielen werden die vielseitigen Möglichkeiten demonstriert.

21) 500 g des Präpolymeren gemäß Beispiel 11 mit einem NCO-Gehalt von 3,27 % werden auf 70 °C erwärmt und unter Feuchtigkeitsauschluß in ca. 2 Stunden mit 66 g der Hydroxylkomponente gemäß Beispiel 1 versetzt. Danach wird für ca. 5 Stunden bei 70-80 °C weiter gerührt, bis kein —NCO mehr nachweisbar ist. Das Wasserstoffäquivalent des Umsetzungsproduktes beträgt 725.

22) 500 g des Präpolymeren gemäß Beispiel 12 mit einem NCO-Gehalt von 2,6 % werden auf 70 °C erwärmt und unter Feuchtigkeitsausschluß in ca. 2 Stunden mit 52,5 g der Hydroxylkomponente gemäß Beispiel 1 versetzt. Danach wird für ca. 5 Stunden bei 60-70 °C weiter gerührt, bis kein —NCO mehr nachweisbar ist. Wasserstoffäquivalent 893.

23) 500 g des Präpolymeren gemäß Beispiel 13 mit einem NCO-Gehalt von 3,4 % werden bei 20-30 °C unter Feuchtigkeitsausschluß in ca. 3 Stunden mit 68,5 g der Hydroxylkomponente gemäß Beispiel 1 versetzt. Nach etwa 15 Stunden ist kein —NCO mehr nachweisbar. Wasserstoffäquivalent 701.

24) 500 g des Präpolymeren gemäß Beispiel 14 mit einem NCO-Gehalt von 3,45 % werden bei 20-30 °C unter Feuchtigkeitsausschluß in ca. 3 Stunden mit 69,5 g der Hydroxylkomponente gemäß Beispiel 1 versetzt. Nach etwa 15 Stunden ist kein —NCO mehr nachweisbar. Wasserstoffäquivalent 694.

25) 500 g des Präpolymeren gemäß Beispiel 15 mit einem NCO-Gehalt von 3,55 % werden bei 20-30 °C unter Feuchtigkeitsausschluß in ca. 3 Stunden mit 71,5 g der Hydroxylkomponente gemäß Beispiel 1 versetzt. Nach etwa 15 Stunden ist kein —NCO mehr nachweisbar. Wasserstoffäquivalent 678,5.

26) 500 g des Präpolymeren gemäß Beispiel 16 mit einem NCO-Gehalt von 2,6 % werden bei 20-30 °C unter Feuchtigkeitsausschluß in ca. 3 Stunden mit 133 g einer 40 Gew.-%igen Toluollösung der Hydroxylkomponente gemäß Beispiel 1 versetzt. Nach etwa 15 Stunden ist kein —NCO mehr nachweisbar. Unter vermindertem Druck wird das Toluol entfernt. Wasserstoffäquivalent 892.

27) 500 g des Präpolymeren gemäß Beispiel 16 mit einem NCO-Gehalt von 2,6 Gew.-% werden auf 70 °C erwärmt und unter Feuchtigkeitsausschluß in ca. 2 Stunden mit 52,5 g der Hydroxylkomponente gemäß Beispiel 2 versetzt. Danach wird für ca. 6 Stunden bei 70-80 °C weiter gerührt, bis kein —NCO mehr nachweisbar ist. Wasserstoffäquivalent 592.

28) 500 g des Präpolymeren gemäß Beispiel 17 mit einem NCO-Gehalt von 2,7 Gew.-% werden auf 70 °C erwärmt und unter Feuchtigkeitsausschluß in ca. 2 Stunden mit 59 g der Hydroxylkomponente gemäß Beispiel 3 versetzt. Danach wird für ca. 6 Stunden bei 70-80 °C weiter gerührt, bis kein —NCO mehr nachweisbar ist. Wasserstoffäquivalent 869.

29) 500 g des Präpolymeren gemäß Beispiel 20 mit einem NCO-Gehalt von 2,43 Gew.-% werden auf 70 °C erwärmt und unter Feuchtigkeitsausschluß in ca. 2 Stunden mit 53,2 g der Hydroxylkomponente gemäß Beispiel 4 versetzt. Danach wird für ca. 6 Stunden bei 70-80 °C weiter gerührt, bis kein —NCO mehr nachweisbar ist. Wasserstoffäquivalent 632.

In analoger Weise können auch die Hydroxylkomponenten der Beispiele 1 bis 10 und die Präpolymeren gemäß Beispielen 11 bis 20 für die Umsetzung in äquivalenten Verhältnissen jeweils einzeln oder im Gemisch herangezogen werden.

IV. Hydrolyse

Zum Zwecke der Hydrolyse werden die Umsetzungsprodukte der Beispiele mit einem Überschuß von 110-200 % Wasser, berechnet auf die hydrolisierbaren Gruppen in den Umsetzungsprodukten, versetzt und bei erhöhter Temperatur von 50 bis 150 °C, bevorzugt 70 bis 100 °C homogen verrührt. Man kann auch die Wassermenge im Temperaturbereich von 100 bis 150 °C zu den Umsetzungsprodukten in 30 bis 300 Minuten zutropfen und anschließend bis zur vollständigen Hydrolyse verrühren.

V. Verwendung

30) 72,5 g des Produkts vom Beispiel 21 werden mit 18,5 g eines Diglycidyläthers auf Basis von Bisphenol A und Epichlorhydrin homogen vermischt. Ein Teil wird jeweils auf einer Glasplatte und auf einem Stahlblech zu einer 30 μm starken Schicht aufgetragen. Nach 48 Stunden ist diese zu einem hochelastischen, gut haftenden Belag ausgehärtet. Der andere Teil wird in eine mit einem Trennmittel versehene Form gegossen und bei 40 °C 24 Stunden gehärtet. Es entsteht ein hochelastischer Gießling mit hoher Bruchdehnung, der bei Temperaturen von 0 bis − 10 °C noch nicht versprödet.

31) 72,5 g des Produkts vom Beispiel 21 und 72,5 g eines Polyamidoamins aus dimerisierter Tallölfettsäure und Polyäthylenpolyamin mit einem Wasserstoffäquivalent von 115 werden mit 146 g eines Diglycidyläthers auf Basis von Bisphenol A und Epichlorhydrin homogen vermischt. Die Mischung wird in eine mit einem Trennmittel versehene Form gegossen und bei 50 °C für 24 Stunden gehärtet. Es entsteht ein hochelastischer Gießling mit hoher Bruchdehnung, der bis Temperaturen von 0 bis −10 °C nicht versprödet.

32) Beispiel 30 wird wiederholt, wobei jedoch das Produkt vom Beispiel 21 in hydrolysierter Form eingesetzt wird. Man erreicht nach der Härtung die gleichen Ergebnisse wie nach Anwendungsbeispiel 30.

33) Beispiel 31 wird wiederholt, wobei jedoch das Produkt vom Beispiel 21 in hydrolysierter Form eingesetzt wird. Nach der Härtung erreicht man die gleichen Ergebnisse wie nach Beispiel 31.

**Patentansprüche** (für die Vertragsstaaten : CH, DE, GB, LI, NL)

1. Elastifiziertes Additionsprodukt aus
   a) Polyalkylenäther-polyolen mit einem Molgewicht von 500 bis 10 000 und 2 bis 6-C-Atomen im Alkylenrest und
   b) Polyisocyanaten,

wobei das Verhältnis der NCO-Gruppen der Komponente b) zu den OH-Gruppen der Komponente a) 1,5 : 1 bis 2,5 : 1 beträgt, dadurch gekennzeichnet, daß das Additionsprodukt von a) und b) weiter mit Hydroxyverbindungen der Gruppe
   c) Imidazolidinderivate der Formel

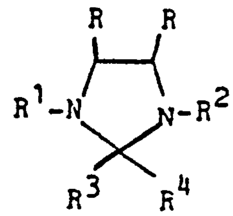

(I)

worin

R Wasserstoff oder Alkyl mit 1 bis 4 C-Atomen,

$R^1$ c1) Wasserstoff, c2) Hydroxyalkyl oder Alkyl mit jeweils 1 bis 12 C-Atomen, c3) $—CH_2—R^5$, c4) $—CH_2—CH_2—COOR^5$, c5) $—CH_2—CH_2—C=O$

$R^5—N—R^5$

oder c6) $—CH_2—CH_2—CN$ ist, worin $R^5$ jeweils Hydroxyalkyl oder Alkyl mit bis zu 8 C-Atomen darstellt,

$R^2$ c7) Alkyl oder Alkylen mit jeweils 1 bis 12 C-Atomen oder einen der Reste c3) bis c6) bedeutet,

$R^3$ und $R^4$ jeweils Wasserstoff oder Alkyl mit 1 bis 5 C-Atomen oder

$R^3$ und $R^4$ zusammen Alkylen mit 4 bis 6 C-Atomen bedeuten, und/oder

d) Hexahydropyrimidinderivate der allgemeinen Formel

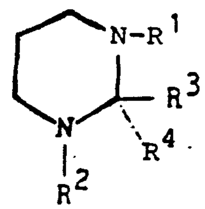

(II)

worin $R^1$ bis $R^5$ die unter c) genannte Bedeutung haben, wobei in den Formeln (I) und (II) jeweils mindestens einer der Substituenten $R^1$ bis $R^5$ eine Hydroxylgruppe trägt, im Verhältnis NCO-Gruppen zu den OH-Gruppen der Komponenten c) und/oder d) etwa 1 : 1 umgesetzt ist und als dieses Umsetzungsprodukt und/oder als Hydrolyseprodukt davon vorliegt.

2. Verwendung von A) mindestens einem elastifizierten Additionsprodukt nach Anspruch 1, als Härter für Formkörper aus B) Epoxydverbindungen mit mehr als einer Epoxydgruppe pro Molekül oder Kombinationen davon mit Monoepoxydverbindungen, allein oder zusammen mit C) weiteren üblichen Zusätzen.

3. Verwendung nach Anspruch 2, dadurch gekennzeichnet, daß die Komponente C) wenigstens zum Teil aus üblichen Aminhartern und/oder Verdünnern besteht.

4. Verwendung nach Anspruch 2 oder 3, dadurch gekennzeichnet, daß die Epoxydverbindungen B) ein Epoxydäquivalent von 150 bis 1 000 und ein Molekulargewicht zwischen 300 und 2 000 aufweisen.

5. Ausführungsform nach einem oder mehreren der Ansprüche 2 bis 4 zur Herstellung von Flächengebilden unter Härtung.

6. Ausführungsform nach Anspruch 5, dadurch gekennzeichnet, daß die Härtung in Gegenwart von Wasser erfolgt.

**Patentansprüche** (für den Vertragsstaat AT)

1. Verfahren zur Herstellung eines elastifizierten Additionsproduktes, dadurch gekennzeichnet, daß mindestens ein

a) Polyalkylenäther-polyol mit einem Molgewicht von 500 bis 10 000 und 2 bis 6-C-Atomen im Alkylenrest und

b) mindestens ein Polyisocyanat,

im Verhältnis NCO-Gruppen der Komponente b) zu den OH-Gruppen der Komponente a) von 1,5 : 1 bis 2,5 : 1 umgesetzt wird und das Additionsprodukt von a) und b) weiter mit Hydroxyverbindungen der Gruppe

c) Imidazolidinderivate der Formel

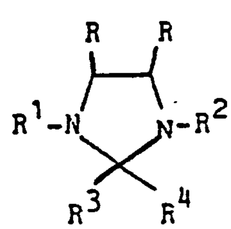

(I)

worin

R Wasserstoff oder Alkyl mit 1 bis 4 C-Atomen,

$R^1$ c1) Wasserstoff, c2) Hydroxyalkyl oder Alkyl mit jeweils 1 bis 12 C-Atomen, c3) $—CH_2—R^5$, c4) $—CH_2—CH_2—COOR^5$, c5) $—CH_2—CH_2—C = O$

$|$

$R^5—N—R^5$

oder c6) $—CH_2—CH_2—CN$ ist, worin $R^5$ jeweils Hydroxyalkyl oder Alkyl mit bis zu 8 C-Atomen darstellt,

$R^2$ c7) Alkyl oder Alkylen mit jeweils 1 bis 12 C-Atomen oder einen der Reste c3) bis c6) bedeutet,

$R^3$ und $R^4$ jeweils Wasserstoff oder Alkyl mit 1 bis 5 C-Atomen oder

$R^3$ und $R^4$ zusammen Alkylen mit 4 bis 6 C-Atomen bedeuten, und/oder

d) Hexahydropyrimidinderivate der allgemeinen Formel

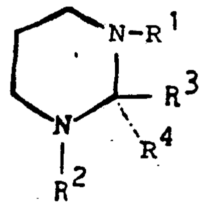

(II)

worin $R^1$ bis $R^5$ die unter c) genannte Bedeutung haben, wobei in den Formeln (I) und (II) jeweils mindestens einer der Substituenten $R^1$ bis $R^5$ eine Hydroxylgruppe trägt, im Verhältnis NCO-Gruppen zu den OH-Gruppen der Komponenten c) und/oder d) von etwa 1 : 1 umgesetzt wird und dieses Umsetzungsprodukt gegebenenfalls hydrolysiert wird.

2. Verwendung von A) mindestens einem elastifizierten Additionsprodukt hergestellt nach Anspruch 1, als Härter für Formkörper für B) Epoxydverbindungen mit mehr als einer Epoxydgruppe pro Molekül oder Kombinationen davon mit Monoepoxydverbindungen, allein oder zusammen mit C) weiteren üblichen Zusätzen.

3. Verwendung nach Anspruch 2, dadurch gekennzeichnet, daß die Komponente C) wenigstens zum Teil aus üblichen Aminhärtern und/oder Verdünnern besteht.

4. Verwendung nach Anspruch 2 oder 3, dadurch gekennzeichnet, daß die Epoxydverbindungen B) ein Epoxydäquivalent von 150 bis 1 000 und ein Molekulargewicht zwischen 300 und 2 000 aufweisen.

5. Ausführungsform nach einem oder mehreren der Ansprüche 2 bis 4 zur Herstellung von Flächengebilden unter Härtung.

6. Ausführungsform nach Anspruch 5, dadurch gekennzeichnet, daß die Härtung in Gegenwart von Wasser erfolgt.

**Claims** (for the Contracting States : CH, DE, GB, LI, NL)

1. An elasticised addition product formed from

a) polyalkylene ether-polyols having a molecular weight of 500 to 10,000 and 2 to 6 C atoms in the alkylene radical and

b) polyisocyanates, the ratio of the NCO in the component b) to the OH groups in the component a) being 1.5 : 1 to 2.5 : 1, characterized in, that the addition product of a) with b) is reacted further with hydroxyl compounds of the group

c) imidazolidine derivative of the formula I

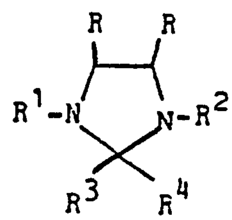

(I)

in which R is hydrogen or alkyl having 1 to 4 carbon atoms,

$R^1$ is c1) hydrogen, c2) hydroxyalkyl and alkyl having 1 to 12 carbon atoms in each case, c3) $—CH_2—R^5$, c4) $—CH_2—CH_2—COOR^5$, c5) $—CH_2—CH_2—C = O$ or c6) $—CH_2—CH_2—CN$ in which $R^5$

$|$

$R^5—N—R^5$

represents in each case hydroxyalkyl or alkyl having up to 8 carbon atoms,

$R^2$ denotes c7) alkyl or alkylene having in each case 1 to 12 carbon atoms or denotes one of the radicals c3) to c6),

$R^3$ and $R^4$ each denote hydrogen or alkyl having 1 to 5 carbon atoms or $R^3$ and $R^4$ together denote alkylene having 4 to 6 carbon atoms, and/or

d) hexahydropyrimidine derivatives of the general formula

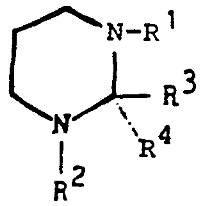

(II)

in which $R^1$ to $R^5$ have the meaning mentioned under c), at least one of each of the substituents $R^1$ to $R^5$ in the formulae (I) and (II) carrying a hydroxyl group and the ratio of NCO groups to the OH groups of the components c) and/or d) being approximately 1 : 1, and the addition product is in the form of this reaction product and/or in the form of the hydrolysis product thereof.

2. Use of A) at least one elasticised addition product according to claim 1 as a curing agent for shaped articles formed from B) epoxide compounds having more than one epoxide group per molecule or combinations thereof with monoepoxide compounds, on their own or together with C) further customary additives.

3. Use according to claim 2, characterised in, that the component C) is composed, at least in part, of customary amine curing agents and/or diluents.

4. Use according to claim 2 or 3, characterised in, that the epoxide compounds B) have an epoxide equivalent of 150 to 1,000 and a molecular weight between 300 and 2,000.

5. Embodiment according to one or more of claims 2 to 4 for the production of sheet-like structures by curing.

6. Embodiment according to claim 5, characterised in, that curing is effected in the presence of water.

**Claims** (for the Contracting State AT)

1. Process for preparing an elasticised addition product which comprises reacting

a) at least one polyalkylene ether-polyol having a molecular weight of 500 to 10,000 and 2 to 6 C atoms in the alkylene radical and

b) at least one polyisocyanate, the ratio of the NCO groups in the component b) to the OH groups in the component a) being 1.5 : 1 to 2.5 : 1, and further reacting the addition product of a) and b) with hydroxyl compounds of the group

c) imidazolidine derivatives of the formula I

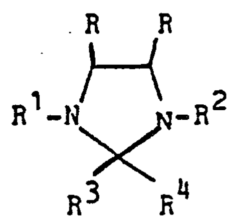

(I)

in which

R is hydrogen or alkyl having 1 to 4 carbon atoms,

$R^1$ is c1) hydrogen, c2) hydroxyalkyl and alkyl having 1 to 12 carbon atoms in each case, c3) $-CH_2-R^5$, c4) $-CH_2-CH_2-COOR^5$, c5) $-CH_2-CH_2-\underset{R^5-N-R^5}{\underset{|}{C}}=O$ or c6) $-CH_2-CH_2-CN$ in which $R^5$ represents in each case hydroxyalkyl or alkyl having up to 8 carbon atoms, $R^2$ denotes c7) alkyl or alkylene having in each case 1 to 12 carbon atoms or denotes one of the radicals c3) to c6), $R^3$ and $R^4$ each denote hydrogen or alkyl having 1 to 5 carbon atoms or $R^3$ and $R^4$ together denote alkylene having 4 to 6 carbon atoms, and/or

d) hexahydropyrimidine derivatives of the general formula

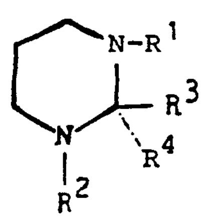

(II)

in which $R^1$ to $R^5$ have the meaning mentioned under c), at least one of each of the substituents $R^1$ to $R^5$ in the formulae (I) and (II) carrying a hydroxyl group and the ratio of NCO groups to the OH groups of the components c) and/or d) being approximately 1 : 1, an optionally subjecting this addition product to hydrolysis.

2. Use of A) at least one elasticised addition product prepared according to claim 1 as a curing agent for shaped articles formed from B) epoxide compounds having more than one epoxide group per molecule or combinations thereof with monoepoxide compounds, on their own or together with C) further customary additives.

3. Use according to claim 2, characterised in, that the component C) is composed, at least in part, of customary amine curing agents and/or diluents.

4. Use according to claim 2 or 3, characterised in, that the epoxide compounds B) have an epoxide equivalent of 150 to 1,000 and a molecular weight between 300 and 2,000.

5. Embodiment according to one or more of claims 2 to 4 for the production of sheet-like structures by curing.

6. Embodiment according to claim 5, characterised in, that curing is effected in the presence of water.

**Revendications** (pour les Etats contractants : CH, DE, GB, LI, NL)

1. Produit d'addition élastifié, constitué :

a) de polyalkylène-éther-polyols ayant une masse moléculaire de 500 à 10 000 et contenant, dans le radical alkylène, de 2 à 6 atomes de carbone, et

b) de poly-isocyanates, le rapport des radicaux —NCO de la composante b) aux radicaux —OH de la composante a) étant compris entre 1,5 : 1 et 2,5 : 1, produit caractérisé en ce que le produit d'addition de a) et b) a en outre réagi avec des composés hydroxyliques pris dans l'ensemble constitué par

c) les dérivés de l'imidazolidine répondant à la formule générale I

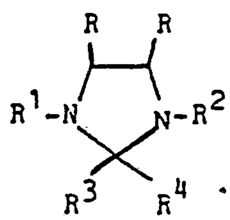

(I)

dans laquelle

R représente l'hydrogène ou un alkyle contenant de 1 à 4 atomes de carbone,

$R^1$ représente c1) l'hydrogène, c2) un hydroxyalkyle ou un alkyle contenant chacun de 1 à 12 atomes de carbone, c3) $—CH_2—R^5$, c4) $—CH_2—CH_2—COOR^5$, c5) $—CH_2—CH_2—C = O$

$R^5—N—R^5$

ou c6) $—CH_2—CH_2—CN$, le symbole $R^5$ désignant à chaque fois un radical hydroxy-alkyle ou alkyle contenant au maximum 8 atomes de carbone,

$R^2$ représente c7) un alkyle ou un alkylène contenant chacun de 1 à 12 atomes de carbone ou un des radicaux c3) à c6),

$R^3$ et $R^4$ représentent chacun l'hydrogène ou un alkyle contenant de 1 à 5 atomes de carbone ou encore forment ensemble un alkylène contenant de 4 à 6 atomes de carbone, et/ou

d) les dérivés de l'hexahydropyrimidine répondant à la formule générale II

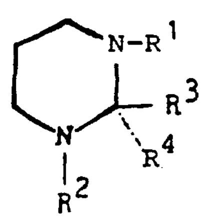

(II)

dans laquelle $R^1$ à $R^5$ ont les significations données sous c), au moins l'un des substituants $R^1$ à $R^5$ portant un radical hydroxy dans chacune des formules I et II, dans un rapport des radicaux —NCO aux radicaux —OH des composantes c) et/ou d) approximativement égal à 1 : 1, et se trouve sous la forme de ce produit de réaction et/ou sous la forme d'un produit d'hydrolyse de celui-ci.

2. Application de A) au moins un produit d'addition élastifié selon la revendication 1 comme durcisseur pour des objets moulés constitués B) de composés époxydiques contenant plus d'un radical

époxy par molécule ou d'associations de tels composés époxydiques avec des composés monoépoxydiques, seuls ou avec C) d'autres additifs usuels.

3. Application selon la revendication 2, caractérisée en ce que la composante C) est constituée, au moins en partie, de durcisseurs aminés usuels et/ou de diluants.

4. Application selon l'une des revendications 2 et 3, caractérisée en ce que les composés époxydiques B) ont un équivalent d'époxy de 150 à 1 000 et une masse moléculaire comprise entre 300 et 2 000.

5. Mode d'exécution selon l'une ou plusieurs des revendications 2 à 4 pour la fabrication d'objets planiformes avec durcissement.

6. Mode d'exécution selon la revendication 5, caractérisé en ce que le durcissement est effectué en présence d'eau.

**Revendications** (pour l'Etat contractant AT)

1. Procédé de préparation d'un produit d'addition élastifié, procédé caractérisé en ce qu'on fait réagir

a) au moins un polyalkylène-éther-polyol ayant une masse moléculaire de 500 à 10 000 et contenant de 2 à 6 atomes de carbone dans le radical alkylène, et

b) au moins un poly-isocyanate, dans un rapport des radicaux —NCO de la composante b) aux radicaux —OH de la composante a) compris entre 1,5 : 1 et 2,5 : 1, on fait réagir le produit d'addition de a) et b) avec des composés hydroxyliques choisis dans l'ensemble constitués par

c) les dérivés de l'imidazolidine répondant à la formule I

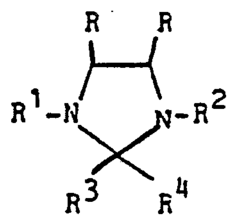

(I)

dans laquelle

R représente l'hydrogène ou un alkyle contenant de 1 à 4 atomes de carbone,

$R^1$ représente c1) l'hydrogène, c2) un hydroxyalkyle ou un alkyle contenant chacun de 1 à 12 atomes de carbone, c3) $-CH_2-R^5$, c4) $-CH_2-CH_2-COOR^5$, C5) $-CH_2-CH_2-C=O$

$R^5-N-R^5$

ou c6) $-CH_2-CH_2-CN$, le symbole $R^5$ désignant à chaque fois un radical hydroxy-alkyle ou alkyle contenant au maximum 8 atomes de carbone,

$R^2$ représente c7) un alkyle ou un alkylène contenant chacun de 1 à 12 atomes de carbone ou un des radicaux c3) à c6),

$R^3$ et $R^4$ représentent chacun l'hydrogène ou un alkyle contenant de 1 à 5 atomes de carbone ou encore forment ensemble un alkylène contenant de 4 à 6 atomes de carbone, et/ou

d) les dérivés de l'hexahydropyrimidine répondant à la formule générale II

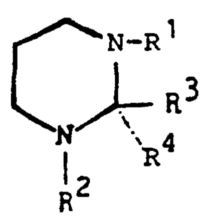

(II)

dans laquelle $R^1$ à $R^5$ ont les significations données sous c), au moins l'un des substituants $R^1$ à $R^5$ portant un radical hydroxy dans chacune des formules I et II, dans un rapport des radicaux —NCO aux radicaux —OH des composantes c) et/ou d) d'environ 1 : 1, et on hydrolyse éventuellement ce produit de réaction.

2. Application de A) au moins un produit d'addition élastifié qui a été préparé selon la revendication 1 comme durcisseur d'objets moulés pour B) des composés époxydiques contenant plus d'un radical époxy par molécule ou pour des associations de tels composés époxydiques avec des composés monoépoxydiques, seuls ou associés à C) d'autres additifs usuels.

3. Application selon la revendication 2, caractérisée en ce que la composante C) est constituée, au moins en partie, de durcisseurs aminés usuels et/ou de diluants.

4. Application selon l'une des revendications 2 et 3 caractérisée en ce que les composés époxydiques B) ont un équivalent d'époxy de 150 à 1 000 et une masse moléculaire comprise entre 300 et 2 000.

5. Mode d'exécution selon l'une ou plusieurs des revendications 2 à 4 pour la fabrication d'objets planiformes avec durcissement.

6. Mode d'exécution selon la revendication 5, caractérisé en ce que le durcissement est effectué en présence d'eau.

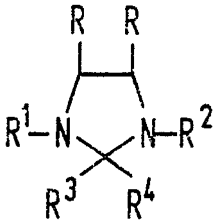

I

II

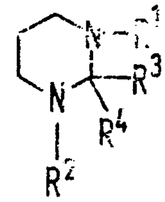

III

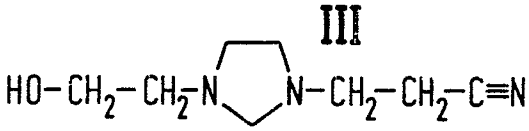

IV

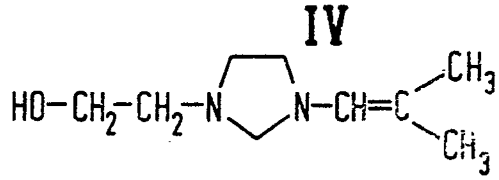

V

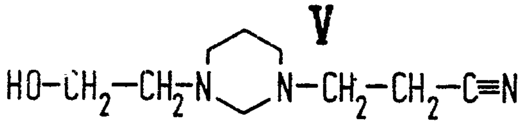

VI

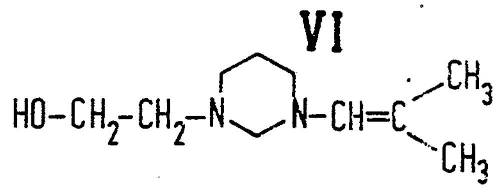

VII

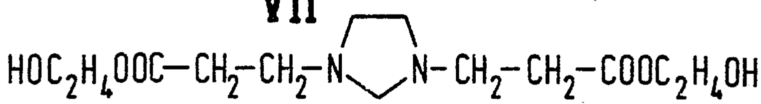

VIII

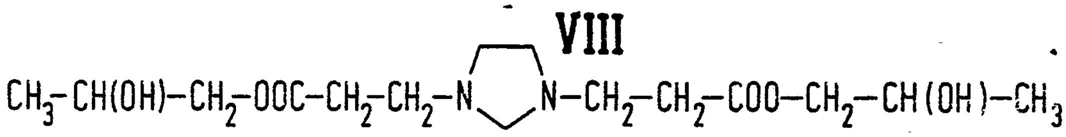

IX

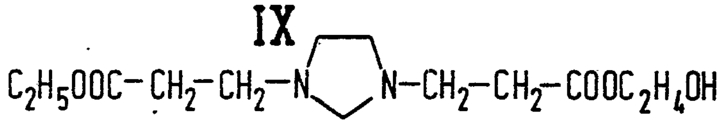

X

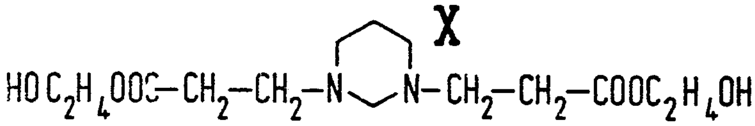

XI

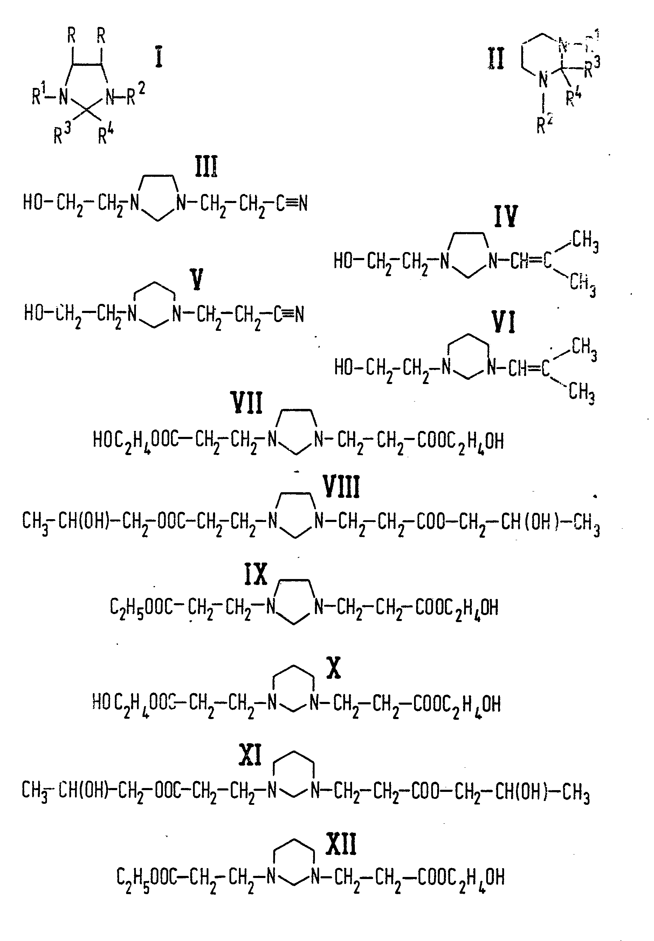

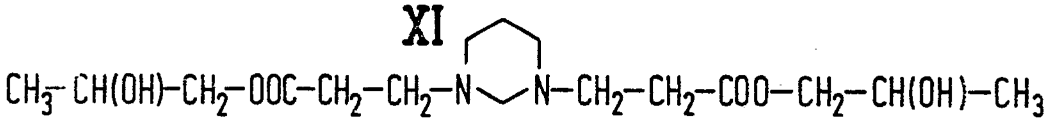

XII